# FASCICULE DE BREVET EUROPEEN

(11) **EP 2 492 025 B1**
(45) Date de publication et mention de la délivrance du brevet: **18.09.2013**
(21) Numéro de dépôt: 12156021.3
(22) Date de dépôt: 17.02.2012
(51) Int. Cl.: B08B 15/02, B01L 1/02, B25J 21/02

(54) **Hotte équipée d'au moins un sas donnant accès à une enceinte à flux laminaire et procédé de circulation de gaz correspondant**
Mit mindestens einer Schleuse ausgestattete Haube mit Zugang zu einem Gehäuse mit Laminarfluss und einschlägiges Gaszirkulationsverfahren
Hood equipped with at least one airlock providing access to a laminar flow cabinet and corresponding gas circulation method

(30) Priorité: 22.02.2011 FR 1151426
(43) Date de publication de la demande: 29.08.2012
(73) Titulaire: Oxygen, 91940 Les Ulis (FR)
(72) Inventeur: Riou, Eric, 91530 SAINT MAURICE MONTCOURONNE (FR)
(74) Mandataire: Pontet Allano & Associes

(56) Documents cités:
- WO-A2-02/074504
- FR-A1- 2 759 619

## Description

### Domaine technique

La présente invention concerne une hotte équipée d'au moins un sas donnant accès à une enceinte dans laquelle circule un flux de gaz. Elle concerne aussi procédé de circulation de gaz.

Le domaine de l'invention est plus particulièrement mais de manière non limitative celui des hottes de laboratoire et/ou des hottes à flux laminaire.

### Etat de la technique antérieure

On connaît déjà des exemples de hotte équipée d'au moins un sas dans lequel circule un flux laminaire d'air et donnant accès à une enceinte dans laquelle circule un flux laminaire d'air.

Le sas est séparé de l'enceinte par une porte. On peut ainsi accéder au contenu de l'enceinte par l'intermédiaire du sas. Ceci permet d'éviter d'ouvrir directement sur l'extérieur l'enceinte, ce qui :
- évite de perturber le flux laminaire dans l'enceinte,
- permet de mieux protéger un manipulateur par rapport à un produit dangereux contenu dans l'enceinte, et
- permet de mieux protéger un produit sensible contenu dans l'enceinte par rapport à un manipulateur ou à l'environnement extérieur.

Toutefois, comme les flux laminaires dans le sas et dans l'enceinte se propagent tous les deux verticalement et sont situés à une même hauteur (c'est-à-dire qu'ils sont situés côte à côte horizontalement), la hotte nécessite deux alimentations et deux évacuations indépendantes d'air : une alimentation d'air vers la hotte et une évacuation d'air en dehors de la hotte spécifiques pour le flux d'air dans le sas, et une alimentation d'air vers la hotte et une évacuation d'air en dehors de la hotte spécifiques pour le flux d'air dans l'enceinte.

Le document WO 02/074504 A2 décrit une hotte comprenant une enceinte et un sas selon le préambule de la revendication 1 ainsi qu'un procédé de circulation d'air correspondant selon le préambule de la revendication 12.

Le but de l'invention est de résoudre au moins un de ces problèmes :
- simplifier la fabrication et/ou l'installation et/ou l'alimentation en air et/ou l'évacuation d'air d'une hotte par rapport à l'état de la technique antérieure;
- réduire les coûts de fabrication et/ou d'installation et/ou d'alimentation en air et/ou d'évacuation d'air d'une hotte par rapport à l'état de la technique antérieure.

### Exposé de l'invention

Cet objectif est atteint avec une hotte selon la revendication 1 comprenant:
- une enceinte munie d'une entrée de gaz et d'une sortie de gaz, agencée pour une circulation d'un flux de gaz entre son entrée et sa sortie,
- un sas muni d'une entrée de gaz et d'une sortie de gaz, agencé pour une circulation d'un flux de gaz entre son entrée et sa sortie,
- une porte séparant le sas de l'enceinte, agencée pour que du gaz ne puisse pas passer à travers elle lorsqu'elle est fermée,
**caractérisée en ce qu'**elle comprend en outre :
- un conduit agencé pour diriger le gaz de la sortie de gaz du sas vers l'entrée de gaz de l'enceinte.

Bien entendu, par « un sas », on entend au moins un sas comme décrit par la suite en référence aux figures.

Le conduit peut comprendre :
- un passage latéral comprenant un espace interne d'une double paroi latérale séparant l'enceinte et le sas ; la porte peut être montée dans la double paroi ; le passage latéral peut se séparer en deux pour longer deux côtés de la porte ; et/ou
- un passage arrière comprenant un espace interne d'une double paroi arrière de l'enceinte ; et/ou
- si la porte comprend deux parois, un espace de séparation entre les deux parois lorsque la porte est fermée.

Le conduit peut en outre être agencé pour diriger le gaz de la sortie de gaz de l'enceinte vers l'entrée de gaz de l'enceinte.

De préférence, une seule parmi l'entrée de gaz de l'enceinte et la sortie de gaz du sas est équipée de moyens de filtration du gaz.

Selon la variante considérée :
- l'entrée de gaz de l'enceinte est équipée de moyens de filtration de gaz ; et/ou
- la sortie de gaz du sas n'est pas équipée de moyens de filtration de gaz ; et/ou
- la sortie de gaz de l'enceinte est équipée de moyens de filtration de gaz ; et/ou
- l'entrée de gaz du sas est équipée de moyens de filtration de gaz.

Du côté de l'entrée de gaz de l'enceinte, le conduit peut déboucher sur un espace d'entrée d'enceinte délimité en partie par l'entrée de gaz de l'enceinte et une évacuation agencée pour évacuer le gaz hors de la hotte. L'évacuation peut être équipée de moyens motorisés pour une extraction du gaz hors de la hotte par l'évacuation et/ou de moyens de filtration de gaz.

La hotte selon l'invention peut comprendre en outre des moyens de soufflage et/ou d'aspiration agencés pour une circulation du gaz dans la hotte. Dans le cas où l'espace d'entrée est présent, les moyens de soufflage et/ou d'aspiration peuvent être agencés pour aspirer du gaz du conduit et injecter le gaz aspiré dans l'espace d'entrée.

Du côté de la sortie de gaz de l'enceinte, le conduit peut déboucher sur un espace de sortie d'enceinte délimité en partie par la sortie de gaz de l'enceinte.

La hotte peut être agencée pour être alimentée en gaz par l'entrée de gaz du sas, de préférence pour être alimentée uniquement en gaz par l'entrée de gaz du (ou de chacun des) sas.

Le flux de gaz dans le sas est de préférence laminaire et/ou vertical.

Le flux de gaz dans l'enceinte est de préférence laminaire et/ou vertical.

De préférence, les flux de gaz dans le sas et dans l'enceinte ont le même sens et la même direction de propagation, de préférence verticale.

L'enceinte peut être munie d'une paroi hermétique avant frontale équipée d'au moins un orifice pour suspendre une manchette de manipulation.

Suivant encore un autre aspect de l'invention, il est proposé un procédé de circulation de gaz selon la revendication 12, de préférence mis en oeuvre dans une hotte selon l'invention, et comprenant :
- une circulation d'un flux de gaz entre une entrée et une sortie d'une enceinte,
- une circulation d'un flux de gaz entre une entrée et une sortie d'un sas qui est séparé de l'enceinte par une porte, de sorte que du gaz ne puisse pas passer à travers la porte lorsqu'elle est fermée,
caractérisé en ce que l'on dirige du gaz de la sortie de gaz du sas vers l'entrée de gaz de l'enceinte par un conduit.

On peut diriger en outre le gaz de la sortie de gaz de l'enceinte vers l'entrée de gaz de l'enceinte par le conduit.

De préférence, on filtre le gaz à travers une seule parmi l'entrée de gaz de l'enceinte et la sortie de gaz du sas.

Selon la variante considérée :
- on filtre le gaz à travers l'entrée de gaz de l'enceinte ; et/ou
- on ne filtre pas le gaz à travers la sortie de gaz du sas ; et/ou
- on filtre le gaz à travers la sortie de gaz de l'enceinte ; et/ou
- on filtre le gaz à travers l'entrée de gaz du sas.

Du côté de l'entrée de gaz de l'enceinte, on peut évacuer le gaz hors de la hotte de préférence à partir un espace d'entrée d'enceinte délimité en partie par l'entrée de gaz de l'enceinte et une évacuation agencée pour évacuer le gaz hors de la hotte. On peut filtrer le gaz à travers l'évacuation de gaz.

Le procédé selon l'invention peut comprendre en outre un soufflage et/ou une aspiration du gaz pour une circulation du gaz dans la hotte. Dans le cas où l'espace d'entrée est présent, le soufflage et/ou l'aspiration peut comprendre une aspiration du gaz du conduit et une injection du gaz aspiré dans l'espace d'entrée.

On peut alimenter la hotte en gaz par l'entrée de gaz du sas, de préférence uniquement par l'entrée de gaz du (ou de chacun des sas).

### Description des figures et modes de réalisation

D'autres avantages et particularités de l'invention apparaîtront à la lecture de la description détaillée de mises en oeuvre et de modes de réalisation nullement limitatifs, et des dessins annexés suivants :
- la figure 1 est une vue en perspective d'ensemble d'un premier mode de réalisation de hotte 1 selon l'invention, qui est un mode de réalisation préféré de l'invention,
- la figure 2 est une vue de coupe de face de la hotte 1 selon le plan E de la figure 1,
- la figure 3 est une vue de coupe de profil de la hotte 1 selon le plan D de la figure 2,
- les figures 4 et 5 sont des vues en perspective de deux parties complémentaires de la hotte 1 de la figure 1, selon une coupe selon le plan A de la figure 2,
- la figure 6 est une vue en perspective d'une partie de la hotte 1 de la figure 1, selon une coupe selon le plan B de la figure 2, et
- la figure 7 est une vue en perspective d'une partie de la hotte 1 de la figure 1, selon une coupe selon le plan C de la figure 2.

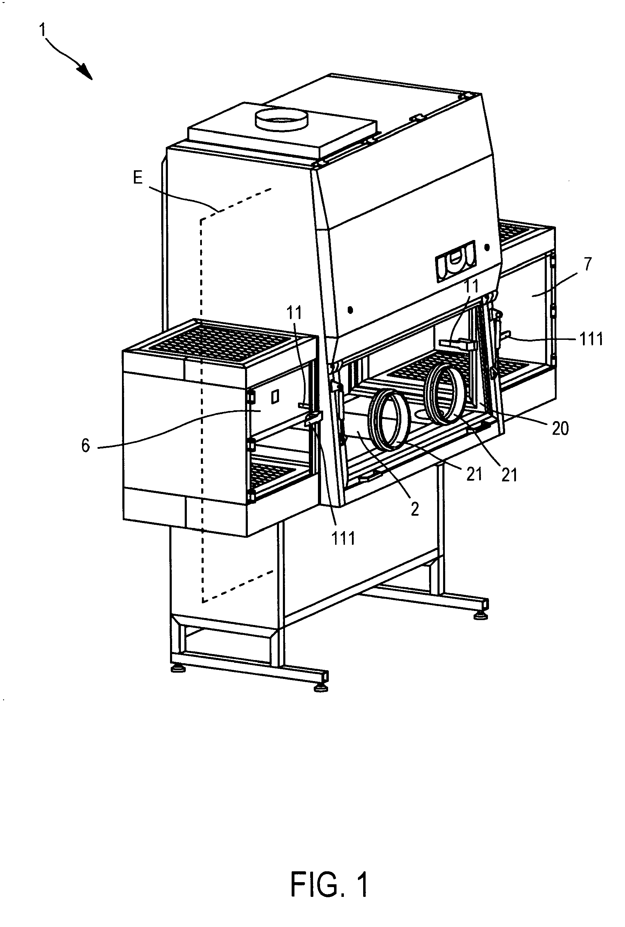

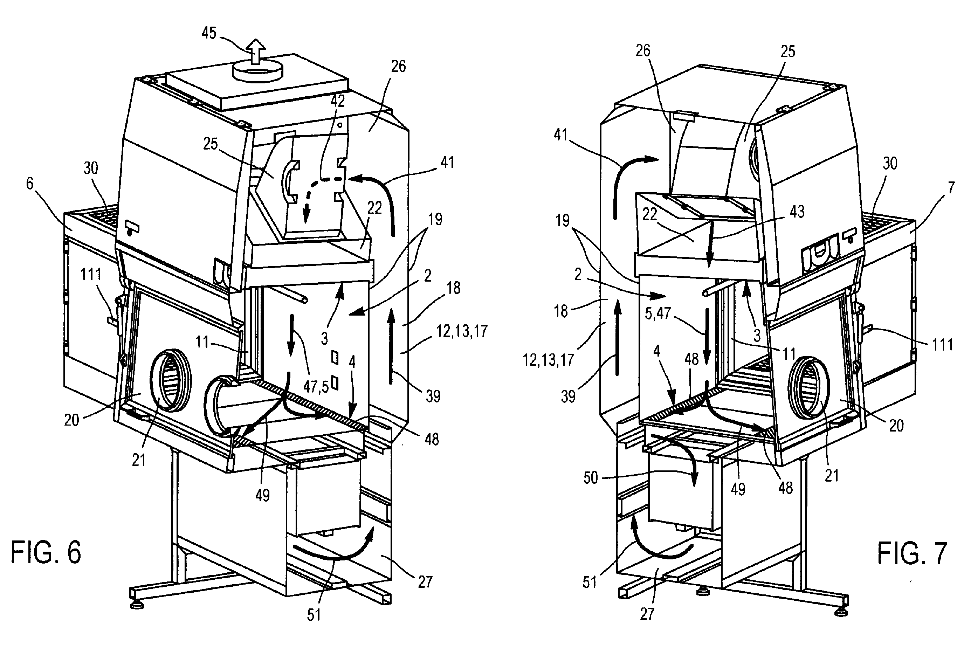

On va tout d'abord décrire, en référence aux figures 1 à 7, un premier mode de réalisation de hotte 1 selon l'invention.

La hotte 1 comprend :
- une enceinte 2 munie d'une entrée de gaz 3 et d'une sortie de gaz 4, agencée pour une circulation d'un flux de gaz 5 entre son entrée 3 et sa sortie 4,
- deux sas 6, 7 munis chacun d'une entrée de gaz 8 et d'une sortie de gaz 9, et chacun agencé pour une circulation d'un flux de gaz 10 entre son entrée 8 et sa sortie 9,
- pour chaque sas 6 ou 7 une porte 11 séparant le sas 6 ou 7 de l'enceinte 2, agencée pour que du gaz ne puisse pas passer à travers elle lorsqu'elle est fermée, et
- pour chaque sas 6 ou 7 un conduit respectivement 12 ou 13 agencé pour diriger le gaz de la sortie 9 de gaz de ce sas 6 ou 7 vers l'entrée 3 de gaz de l'enceinte 2.

Les conduits 12 et 13 sont distincts.

Pour chaque sas 6 ou 7, la porte 11 séparant le sas 6 ou 7 de l'enceinte 2 est agencée pour que du gaz ou un autre objet puisse passer directement du sas 6 ou 7 à l'enceinte 2 sans passer par le conduit respectivement 12 ou 13 lorsque cette porte 11 est ouverte.

Le volume interne de travail de l'enceinte 2 dans lequel circule le flux 5 est en classe ISO 3 selon la norme NF EN 14 644-1. Le volume interne de travail de l'enceinte 2 dans lequel circule le flux 5 est d'environ 300 litres.

Dans la description du mode de réalisation préférentiel de l'invention en référence aux figures 1 à 7, le gaz considéré est de l'air.

La hotte 1 est agencée pour être alimentée en gaz uniquement par l'entrée 8 de gaz de chaque sas 6, 7.

Chaque sas 6, 7 est en outre équipé d'une porte 111. Lorsqu'elles sont fermées, les portes 11 et 111 d'un sas donné 6 ou 7 sont sensiblement perpendiculaires l'une par rapport à l'autre.

Nous allons par la suite faire la description de la hotte 1 en ne considérant qu'un seul des sas 6 ainsi que le conduit 12 associé et la porte 11 associée. La description qui en sera faite sera valable par analogie pour chacun des sas 6, 7 et de la porte 11 ou du conduit respectivement 12, 13 associé.

Le conduit 12 est extérieur au volume interne du sas 6 dans lequel circule le flux de gaz 10 et est extérieur au volume interne de l'enceinte 2 dans lequel circule le flux de gaz 5.

Le flux 10 de gaz dans le sas 6 est laminaire.

Le flux 10 de gaz dans le sas 6 est vertical.

Le flux 5 de gaz dans l'enceinte 2 est laminaire.

Le flux 5 de gaz dans l'enceinte 2 est vertical.

Les flux 5, 10 de gaz dans le sas 6 et dans l'enceinte 2 ont le même sens (du haut vers le bas) et la même direction (verticale) de propagation.

Les flux 5, 10 de gaz dans le sas 6 et dans l'enceinte 2 se propagent sensiblement à une même hauteur (c'est-à-dire qu'ils sont situés l'un à côté de l'autre horizontalement).

Le conduit 12 comprend un passage latéral 14 comprenant un espace interne 15 d'une double paroi latérale 16 en acier séparant l'enceinte 2 et le sas 6. La porte 11 est montée dans la double paroi 16. Le cadre ou montant par lequel la porte 11 est montée dans la double paroi 16 est hermétique, de sorte qu'un flux de gaz ne peut pas s'échapper directement de l'espace interne 15 dans le sas 6 ou dans l'enceinte 2. Le passage latéral 14, et plus précisément l'espace interne 15, se sépare en deux parties 15a, 15b pour longer deux côtés opposés de la porte 11.

La direction de propagation des flux 5, 10 de gaz dans le sas 6 et dans l'enceinte 2 est sensiblement parallèle au plan de la porte 11 et de la double paroi latérale 16.

Ainsi, le passage latéral 14 est agencé pour diriger le gaz de la sortie 9 de gaz du sas 6 vers l'entrée 3 de gaz de l'enceinte 2.

Le conduit 12 comprend un passage arrière 17 comprenant un espace interne 18 d'une double paroi arrière 19 en acier de l'enceinte 2.

Ainsi, le passage arrière 17 est agencé pour diriger le gaz de la sortie 9 de gaz du sas 6 vers l'entrée 3 de gaz de l'enceinte 2.

Le passage latéral 14 est agencé pour diriger le gaz de la sortie 4 de gaz de l'enceinte 2 vers l'entrée 3 de gaz de l'enceinte 2.

Le passage arrière 17 est agencé pour diriger le gaz de la sortie 4 de gaz de l'enceinte 2 vers l'entrée 3 de gaz de l'enceinte 2.

Ainsi, le conduit 12 est en outre agencé pour diriger le gaz de la sortie 4 de gaz de l'enceinte 2 vers l'entrée 3 de gaz de l'enceinte 2.

L'enceinte 2 est en outre munie d'une paroi hermétique avant frontale 20 équipée d'au moins un orifice 21 pour suspendre une manchette de manipulation (non représentée). La paroi 20 est une vitre en verre ou en polyméthacrylate de méthyle (PMMA). Chaque manchette de manipulation suspendue à un orifice 21 est un gant, typiquement en néoprène ou en caoutchouc naturel, est agencé pour recouvrir la main et une grande partie du bras d'un utilisateur et pénètre à l'intérieur de l'enceinte 2 pour permettre à l'utilisateur de manipuler un produit dans l'enceinte 2 par l'intermédiaire de ce gant tout en isolant complètement le volume interne de l'enceinte 2 par rapport à l'utilisateur (pas de contact direct physique entre la main et le produit et pas de diffusion de vapeur à travers l'orifice 21 ou la paroi frontale 20).

La double paroi arrière 19 n'est pas une paroi de séparation entre le sas 6 et l'enceinte 2, et est donc distincte de la double paroi 16. La double paroi arrière 19 est une paroi opposée à la paroi 20 par rapport à l'enceinte 2.

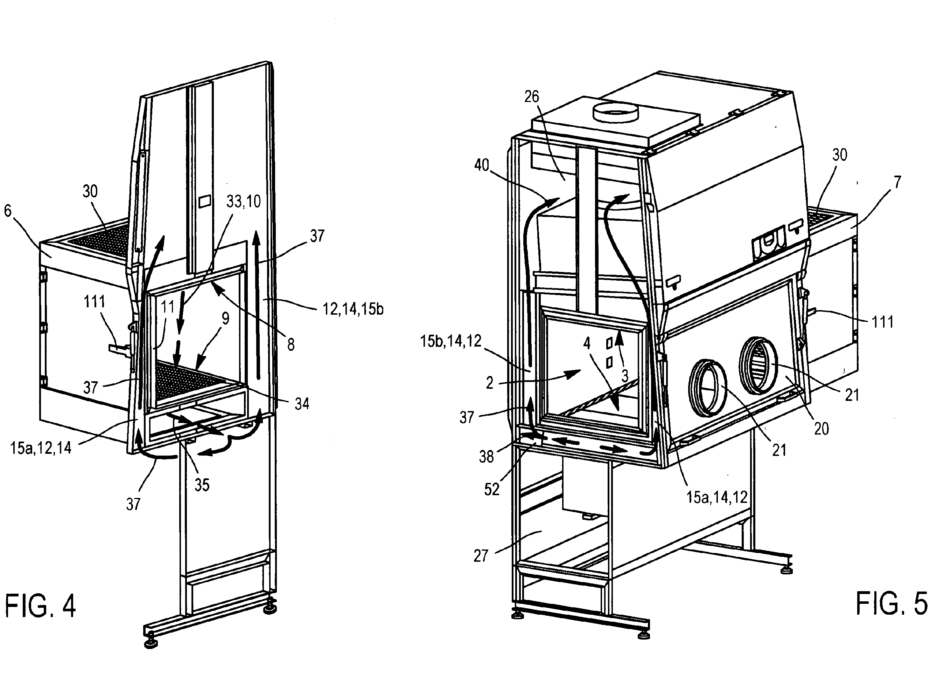

Sur la figure 1, la porte 11 et la paroi 20 sont représentées comme étant transparentes, ce qui correspond au cas réel. Sur les figures 4 à 7, la porte 11 et la paroi 20 sont représentées comme étant non transparentes uniquement pour permettre de mieux distinguer ces éléments.

Du côté de l'entrée 3 de gaz de l'enceinte 2, le conduit 12 débouche sur un espace d'entrée 22 d'enceinte 2 délimité en partie par l'entrée de gaz 3 de l'enceinte 2 et une évacuation 23 agencée pour évacuer le gaz hors de la hotte 1.

L'évacuation 23 est équipée de moyens 24 motorisés pour une extraction du gaz de l'espace 22 hors de la hotte 1 par l'évacuation 23.

La hotte 1 comprend en outre des moyens motorisés 25 de soufflage et/ou d'aspiration agencés pour une circulation et une reprise du gaz dans la hotte 1. Les moyens 25 sont agencés pour maintenir une vitesse du flux laminaire 5 dans l'enceinte 2 à 0,4 mètre par seconde. Les moyens de soufflage et/ou d'aspiration sont agencés pour aspirer du gaz du conduit 12 et injecter le gaz aspiré dans l'espace d'entrée 22. Plus exactement, les moyens de soufflage et/ou d'aspiration sont agencés pour aspirer du gaz d'un espace 26 du conduit 12 sur lesquels débouchent le passage latéral 14 et le passage arrière 17 du conduit 12 (plus exactement sur lesquels débouchent une extrémité supérieure du passage latéral 14 et une extrémité supérieure du passage arrière 17). Les moyens de soufflage et d'aspiration sont situés dans cet espace 26. L'espace 26 est situé dans une partie supérieure de la hotte 1, située au dessus de l'intérieur de l'enceinte 2 dans lequel circule le flux 5.

Du côté de la sortie 4 de gaz de l'enceinte 2, le conduit 12 (plus exactement chacun parmi une extrémité inférieure (ou entrée) du passage latéral 14 et une extrémité inférieure (ou entrée) du passage arrière 17) débouche sur un espace 27 de sortie d'enceinte 2 délimité en partie d'une part par la sortie 4 de gaz de l'enceinte 2 et d'autre part par un trou ou jonction 52 par lequel le passage latéral 14 et le passage arrière 17 communiquent. L'espace 27 est situé dans une partie inférieure de la hotte 1, située au dessous de l'intérieur de l'enceinte 2 dans lequel circule le flux 5.

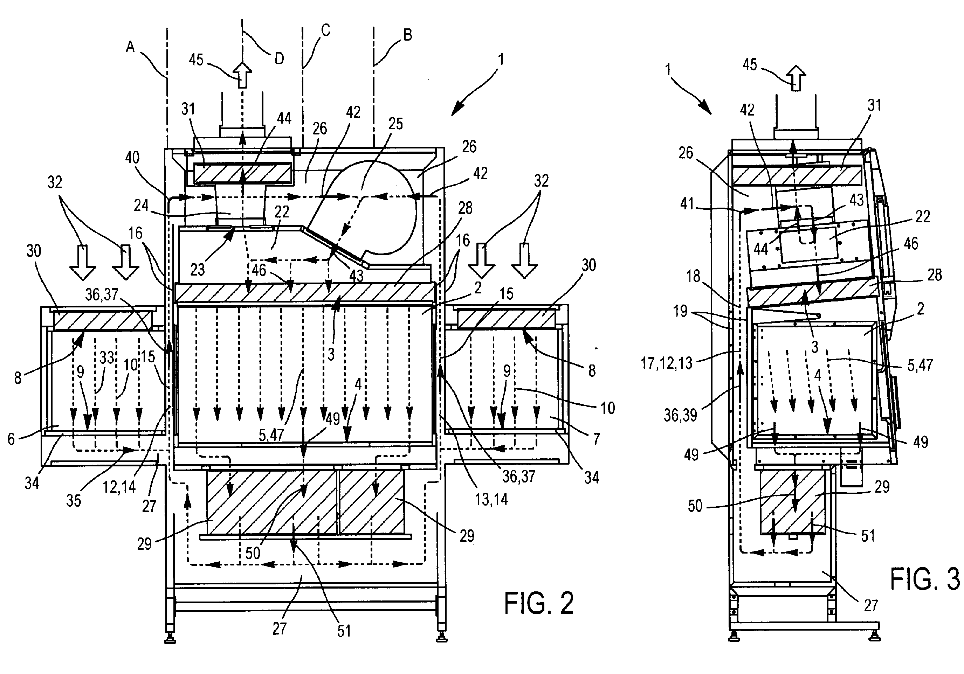

Sur les figures 2 et 3, tout moyen de filtration est représenté en hachuré.

Selon le mode de réalisation décrit de l'invention, une seule parmi l'entrée 3 de gaz de l'enceinte 2 et la sortie 9 de gaz du sas 6 est équipée de moyens de filtration 28 du gaz. Dans le cas présent, l'entrée 3 de gaz de l'enceinte 2 est équipée des moyens de filtration 28 de gaz mais la sortie 9 de gaz du sas 6 n'est pas équipée de moyens de filtration de gaz.

L'entrée 3 de gaz de l'enceinte 2 est équipée des moyens de filtration 28 de gaz. Les moyens de filtration 28 comprennent un filtre absolu de type HEPA selon la norme EN 1822.

La sortie 4 de gaz de l'enceinte 2 est équipée de moyens de filtration 29 de gaz. Les moyens de filtration 29 comprennent un filtre absolu de type HEPA selon la norme EN 1822.

L'entrée 8 de gaz du sas 6 l'enceinte 2 est équipée de moyens de filtration 30 de gaz. Les moyens de filtration 30 comprennent un filtre absolu de type HEPA selon la norme EN 1822.

La sortie 9 de gaz du sas 6 n'est pas équipée de moyens de filtration de gaz.

L'évacuation 23 de gaz est équipée de moyens de filtration 31 de gaz. Les moyens de filtration 31 comprennent un filtre absolu de type HEPA selon la norme EN 1822.

On remarque sur les figures que le passage arrière 17 est commun aux conduits 12, 13 de chacun des sas 6, 7.

On va maintenant décrire, toujours en référence aux figures 1 à 7, un procédé de circulation de gaz, mis en oeuvre dans la hotte 1.

Dans la suite de ce document, on mettra entre parenthèses dans une phrase des références numériques correspondant à des flèches représentant un flux ou mouvement de gaz en cours de description dans cette phrase.

On alimente la hotte 1 en gaz (flèche 32) uniquement par l'entrée 8 de gaz du sas 6 et bien entendu par similitude du sas 7.

Nous allons par la suite faire la description du procédé de circulation de gaz dans la hotte 1 en ne considérant qu'un seul des sas 6 et son conduit 12 associé. La description qui en sera faite sera valable par analogie pour chacun des sas 6, 7 et du conduit respectivement 12, 13 associé.

Au niveau de cette alimentation, on filtre le gaz par les moyens de filtration 30 à travers l'entrée 8 de gaz du sas 6.

Après cela, le procédé selon l'invention comprend une circulation du flux 10 de gaz entre l'entrée 8 et la sortie 9 du sas 6 (flèche 33). Le flux 10 de gaz dans le sas 6 est laminaire et vertical.

Après avoir traversé le sas 6, le gaz est évacué au niveau de la sortie 9 du sas 6 à travers une grille perforée 34. On ne filtre pas le gaz par des moyens de filtration à travers la sortie 9 de gaz du sas 6.

Ensuite, le gaz émerge de la sortie 9 de gaz du sas 6 (flèche 35) et on dirige le gaz de la sortie 9 de gaz du sas 6 vers l'entrée 3 de gaz de l'enceinte 2 par le conduit 12 (flèche 36) par un effet d'aspiration par les moyens d'aspiration 25. Le conduit 12 comprend :
- le passage latéral 14,
- le passage arrière 17,
- l'espace 26 de conduit.

Le passage latéral 14 et le passage arrière 17 communiquent via le trou 52.

Plus précisément, le gaz émerge de la sortie 9 de gaz (flèche 35) et on dirige le gaz de la sortie 9 de gaz du sas 6 vers l'entrée 3 de gaz de l'enceinte 2 :
- par le passage latéral 14 (flèche 37), et
- par le passage arrière 17 via le trou 52 (flèches 38 et 39), et
ce gaz débouche dans l'espace 26 de conduit que ce soit en sortie (ou extrémité supérieure) du passage latéral 14 (flèche 40) ou en sortie (ou extrémité supérieure) du passage arrière 17 (flèche 41)

Du côté de l'entrée 3 de gaz de l'enceinte 2, le conduit 12 débouche (à travers les moyens 25 de soufflage) sur l'espace d'entrée 22 délimité en partie par l'entrée 3 de gaz de l'enceinte 2 et par l'évacuation 23.

Les moyens de soufflage et/ou d'aspiration 25 mettre en oeuvre une circulation et une reprise du gaz dans la hotte 1: les moyens 25 de soufflage et/ou d'aspiration aspirent du gaz du conduit 12, plus précisément aspirent du gaz de l'espace 26 de conduit (flèche 42) et injectent (flèche 43) le gaz aspiré dans l'espace d'entrée 22. On fait donc circuler le gaz de l'espace 26 vers l'espace d'entrée 22.

Une fois dans l'espace d'entrée 22, c'est à dire après avoir quitté le conduit 12, le gaz est dirigé selon deux chemins distincts :
- l'évacuation 23 est équipée de moyens motorisés 24 qui extraient le gaz hors de l'espace d'entrée 22 et de la hotte 1 par l'évacuation 23 (flèche 45). On filtre le gaz par les moyens de filtration 31 à travers l'évacuation 23 de gaz (flèche 44).
- on filtre le gaz par les moyens de filtration 28 à travers l'entrée de gaz 3 de l'enceinte 2 (flèche 46). Ainsi on filtre le gaz par les moyens de filtration 28 à travers une seule parmi l'entrée de gaz 3 de l'enceinte 2 et la sortie de gaz 9 du sas 6. Le procédé selon l'invention comprend une circulation (flèche 47) du flux de gaz 5 entre l'entrée 3 et la sortie 4 de l'enceinte 2. Le flux 5 de gaz dans l'enceinte 2 est laminaire et vertical.

Après avoir traversé l'enceinte 2, le gaz est évacué au niveau de la sortie 4 de l'enceinte 2 à travers a moins une grille perforée 48 (flèche 49). On filtre le gaz par les moyens de filtration 29 à travers la sortie 4 de gaz de l'enceinte 2 (flèche 50).

Enfin, le gaz débouche de la sortie 4 de gaz de l'enceinte 2 dans l'espace de sortie 27 (flèche 51), et l'on dirige le gaz de la sortie 4 de gaz de l'enceinte 2 vers l'entrée 3 de gaz de l'enceinte 2 par le conduit 12 par un effet d'aspiration par les moyens d'aspiration 25.

Plus précisément, le gaz émerge de la sortie 4 de gaz de l'enceinte 2 (flèche 51) et on dirige le gaz de la sortie 4 vers l'entrée 3 de gaz de l'enceinte 2 :
- par le passage latéral 14 via le trou 52 (flèche 37), et
- par le passage arrière 17 (flèche 39), et
ce gaz débouche dans l'espace 26 de conduit que ce soit en sortie du passage latéral 14 (flèche 40) ou en sortie du passage arrière 17 (flèche 41)

Comme décrit précédemment, les moyens de soufflage et/ou d'aspiration 25 mettre en oeuvre une circulation et une reprise dans la hotte 1 de ce gaz en provenance du conduit 12 (du passage latéral 14 et du passage arrière 17) et dirige le gaz selon deux chemins distincts:
- par l'évacuation 23 (flèche 45), et
- par la circulation (flèche 47) du flux de gaz 5 entre l'entrée 3 et la sortie 4 de l'enceinte 2.

Les moyens de soufflage et/ou d'aspiration 25 mettent donc en oeuvre une circulation et une reprise dans la hotte 1 de gaz en provenance aussi bien du sas 6 que de l'enceinte 2.

Bien sûr, l'invention n'est pas limitée aux exemples qui viennent d'être décrits et de nombreux aménagements peuvent être apportés à ces exemples sans sortir du cadre de l'invention.

En particulier, dans des variantes de l'invention:
- la porte 11 du sas 6 (ou de chacun des sas 6,7) comprend deux parois, par exemple comme du double vitrage, le montant ou cadre de cette porte 11 n'est pas hermétique, et le conduit 12 comprend un espace de séparation ouvert entre ces deux parois. Ainsi, lorsque la porte 11 est fermée, du gaz passe dans cet espace de séparation vers l'entrée 3 de l'enceinte 2 de la même manière que dans l'espace interne 15.; et/ou
- de préférence en cas d'inexistence du trou 52 reliant les passages latéral 14 et arrière 17, le passage latéral 14 est agencé pour diriger le gaz de la sortie 9 de gaz du sas 6 vers l'entrée 3 de gaz de l'enceinte 2, mais n'est pas agencé pour diriger le gaz de la sortie 4 de gaz de l'enceinte 2 vers l'entrée 3 de gaz de l'enceinte 2 : on dirige le gaz de la sortie 9 de gaz du sas 6 vers l'entrée 3 de gaz de l'enceinte 2 par le passage latéral 14 mais on ne dirige pas le gaz de la sortie 4 de l'enceinte 2 vers l'entrée de gaz 3 de l'enceinte 2 par le passage latéral 14 ; et/ou
- de préférence en cas d'inexistence du trou 52 reliant les passages latéral 14 et arrière 17, le passage arrière 17 est agencé pour ne pas diriger le gaz de la sortie 9 de gaz du sas 6 vers l'entrée 3 de gaz de l'enceinte 2, mais est agencé pour diriger le gaz de la sortie 4 de gaz de l'enceinte 2 vers l'entrée 3 de gaz de l'enceinte 2 : on ne dirige pas le gaz de la sortie 9 de gaz du sas 6 vers l'entrée 3 de gaz de l'enceinte 2 par le passage arrière 17 mais on dirige le gaz de la sortie 4 de l'enceinte 2 vers l'entrée de gaz 3 de l'enceinte 2 par le passage arrière 17.

## Revendications

1. Hotte (1) comprenant :
- une enceinte (2) munie d'une entrée de gaz (3) et d'une sortie de gaz (4), agencée pour une circulation d'un flux (5) de gaz entre son entrée et sa sortie,
- un sas (6 ; 7) muni d'une entrée de gaz (8) et d'une sortie (9) de gaz, agencé pour une circulation d'un flux de gaz (10) entre son entrée et sa sortie,
- une porte (11) séparant le sas de l'enceinte, agencée pour que du gaz ne puisse pas passer à travers elle lorsqu'elle est fermée,
**caractérisée en ce qu**'elle comprend en outre :
- un conduit (12 ; 13) agencé pour diriger le gaz de la sortie de gaz du sas vers l'entrée de gaz de l'enceinte.

2. Hotte selon la revendication 1, **caractérisée en ce que** le conduit comprend un passage latéral (14) comprenant un espace interne (15) d'une double paroi latérale (16) séparant l'enceinte et le sas.

3. Hotte selon la revendication 2, **caractérisée en ce que** la porte est montée dans la double paroi.

4. Hotte selon la revendication 3, **caractérisée en ce que** le passage latéral se sépare en deux pour longer deux côtés de la porte.

5. Hotte selon l'une quelconque des revendications précédentes, **caractérisée en ce que** le conduit comprend un passage arrière (17) comprenant un espace interne (18) d'une double paroi arrière (19) de l'enceinte.

6. Hotte selon l'une quelconque des revendications précédentes, **caractérisée en ce que** le conduit est en outre agencé pour diriger le gaz de la sortie de gaz de l'enceinte vers l'entrée de gaz de l'enceinte.

7. Hotte selon l'une quelconque des revendications précédentes, **caractérisée en ce que** l'entrée de gaz de l'enceinte est équipée de moyens de filtration (28) de gaz mais **en ce que** la sortie de gaz du sas n'est pas équipée de moyens de filtration de gaz.

8. Hotte selon l'une quelconque des revendications précédentes, **caractérisée en ce que** du côté de l'entrée de gaz de l'enceinte, le conduit débouche sur un espace d'entrée (22) d'enceinte délimité en partie par l'entrée de gaz de l'enceinte et une évacuation (23) agencée pour évacuer le gaz hors de la hotte.

9. Hotte selon l'une quelconque des revendications précédentes, **caractérisée en ce qu'**elle comprend en outre des moyens (25) de soufflage et/ou d'aspiration agencés pour une circulation du gaz dans la hotte.

10. Hotte selon la revendication 9 considérée comme dépendante de la revendication 8, **caractérisée en ce que** les moyens de soufflage et/ou d'aspiration sont agencés pour aspirer du gaz du conduit et injecter le gaz aspiré dans l'espace d'entrée.

11. Hotte selon l'une quelconque des revendications précédentes, **caractérisée en ce que** du côté de la sortie de gaz de l'enceinte, le conduit débouche sur un espace de sortie (27) d'enceinte délimité en partie par la sortie de gaz de l'enceinte.

12. Procédé de circulation de gaz, comprenant :
- une circulation d'un flux de gaz (5) entre une entrée (3) et une sortie (4) d'une enceinte (2),
- une circulation d'un flux (10) de gaz entre une entrée (8) et une sortie (9) d'un sas (6 ; 7) qui est séparé de l'enceinte par une porte (11), de sorte que du gaz ne puisse pas passer à travers la porte lorsqu'elle est fermée,
**caractérisé en ce que** l'on dirige du gaz de la sortie de gaz du sas vers l'entrée de gaz de l'enceinte par un conduit (12 ; 13).

## Patentansprüche

1. Abzugshaube (1), enthaltend:
- ein Gehäuse (2), das mit einem Gaseinlass (3) und einem Gasauslass (4) versehen ist und für eine Umwälzung eines Gasstroms (5) zwischen seinem Einlass und seinem Auslass vorgesehen ist,
- eine Schleuse (6; 7), die mit einem Gaseinlass (8) und einem Gasauslass (9) versehen ist und für eine Umwälzung eines Gasstroms (10) zwischen ihrem Einlass und ihrem Auslass vorgesehen ist,
- ein Tor (11), welches die Schleuse von dem Gehäuse trennt und dazu vorgesehen ist, dass kein Gas durch sie hindurch strömen kann, wenn sie geschlossen ist,
**dadurch gekennzeichnet, dass** sie ferner enthält:
- eine Leitung (12; 13), die dazu vorgesehen ist, das Gas von dem Gasauslass der Schleuse zum Gaseinlass des Gehäuses zu leiten.

2. Abzugshaube nach Anspruch 1, **dadurch gekennzeichnet, dass** die Leitung einen seitlichen Durchgang (14) aufweist, der einen Innenraum (15) einer seitlichen Doppelwandung (16) einschließt, welche das Gehäuse und die Schleuse trennt.

3. Abzugshaube nach Anspruch 2, **dadurch gekennzeichnet, dass** das Tor in der Doppelwandung montiert ist.

4. Abzugshaube nach Anspruch 3, **dadurch gekennzeichnet, dass** der seitliche Durchgang sich zweiteilt, um sich entlang der beiden Seiten des Tors zu erstrecken.

5. Abzugshaube nach einem der vorangehenden Ansprüche, **dadurch gekennzeichnet, dass** die Leitung einen hinteren Durchgang (17) aufweist, der einen Innenraum (18) einer hinteren Doppelwandung (19) des Gehäuses einschließt.

6. Abzugshaube nach einem der vorangehenden Ansprüche, **dadurch gekennzeichnet, dass** die Leitung ferner dazu vorgesehen ist, um das Gas vom Gasauslass des Gehäuses zum Gaseinlass des Gehäuses zu leiten.

7. Abzugshaube nach einem der vorangehenden Ansprüche, **dadurch gekennzeichnet, dass** der Gaseinlass des Gehäuses mit Filtermitteln (28) zum Filtern der Gase ausgestattet ist, wobei jedoch der Gasauslass der Schleuse nicht mit Gasfiltermitteln ausgestattet ist.

8. Abzugshaube nach einem der vorangehenden Ansprüche, **dadurch gekennzeichnet, dass** auf der Seite von dem Gaseinlass des Gehäuses die Leitung in einen Einlassraum (22) des Gehäuses mündet, der teilweise von dem Gaseinlass des Gehäuses und von einem Ablauf (23) begrenzt wird, der dazu vorgesehen ist, das Gas aus der Abzugshaube auszuleiten.

9. Abzugshaube nach einem der vorangehenden Ansprüche, **dadurch gekennzeichnet, dass** sie ferner Mittel (25) zum Einblasen und/oder Ansaugen aufweist, die für eine Umwälzung von Gas in der Abzugshaube vorgesehen sind.

10. Abzugshaube nach Anspruch 9 in Abhängigkeit von Anspruch 8, **dadurch gekennzeichnet, dass** die Einblas- und/oder Ansaugmittel dazu vorgesehen sind, das Gas aus der Leitung anzusaugen und das angesaugte Gas in den Einlassraum einzublasen.

11. Abzugshaube nach einem der vorangehenden Ansprüche, **dadurch gekennzeichnet, dass** auf der Seite von dem Gasauslass des Gehäuses die Leitung in einen Auslassraum (27) des Gehäuses mündet, der teilweise von dem Gasauslass des Gehäuses begrenzt wird.

12. Verfahren zum Umwälzen von Gas, umfassend:
- eine Umwälzung eines Gasstroms (5) zwischen einem Einlass (3) und einem Auslass (4) eines Gehäuses (2),
- eine Umwälzung eines Gasstroms (10) zwischen einem Einlass (8) und einem Auslass (9) einer Schleuse (6; 7), die durch ein Tor (11) von dem Gehäuse getrennt ist, so dass das Gas nicht durch das Tor strömen kann, wenn es geschlossen ist,
**dadurch gekennzeichnet, dass** das Gas über eine Leitung (12; 13) von dem Gasauslass der Schleuse zum Gaseinlass des Gehäuses geleitet wird.

## Claims

1. Hood (1) comprising:
- an enclosure (2) equipped with a gas inlet (3) and a gas outlet (4) arranged for a circulation of a flow (5) of gas between its inlet and its outlet,
- an airlock (6;7) equipped with a gas inlet (8) and a gas outlet (9) arranged for a circulation of a flow (10) of gas between its inlet and its outlet,
- a door (11), separating the airlock from the enclosure, arranged such that the gas cannot pass through it when it is closed,
**characterised in that** it further comprises:
- a duct (12;13), arranged to conduct gas from the gas outlet of the airlock to the gas inlet of the enclosure.

2. Hood according to claim 1, **characterised in that** the duct comprises a side passage (14), comprising an interior space (15) of a double side wall (16) that separates the enclosure and the airlock.

3. Hood according to claim 2, **characterised in that** the door is mounted in the double wall.

4. Hood according to claim 3, **characterised in that** the side passage is separated in two to run along two sides of the door.

5. Hood according to any of the preceding claims, **characterised in that** the duct comprises a rear passage (17) that comprises an interior space (18) of a double rear wall (19) of the enclosure.

6. Hood according to any of the preceding claims, **characterised in that** the duct is additionally arranged to conduct the gas from the gas outlet of the enclosure towards the gas inlet of the enclosure.

7. Hood according to any of the preceding claims, **characterised in that** the gas inlet of the enclosure is equipped with filtration means (28) for the gas, but the gas outlet of the airlock is not equipped with filtration means for the gas.

8. Hood according to any of the preceding claims, **characterised in that** next to the gas inlet of the enclosure, the duct leads to an inlet space (22) of the enclosure partly delimited by the gas inlet of the enclosure and an exhaust (23) arranged to discharge the gas out of the hood.

9. Hood according to any of the preceding claims, **characterised in that** it further comprises means (25) for blowing and/or suction arranged for a circulation of gas in the hood.

10. Hood according to claim 9, considered to be dependent on claim 8, **characterised in that** the means for blowing and/or suction are arranged to suck the gas from the duct and to inject the sucked-in gas into the inlet space.

11. Hood according to any of the preceding claims, **characterised in that** next to the gas outlet of the enclosure, the duct leads to an outlet space (27) of the enclosure partly delimited by the gas outlet of the enclosure.

12. Method for circulating gas, comprising:
- a circulation of a gas flow (5) between an inlet (3) and an outlet (4) of an enclosure (2),
- a circulation of a gas flow (10) between an inlet (8) and an outlet (9) of an airlock (6;7) that is separated from the enclosure by a door (11), such that the gas may not pass through the door when the door is closed,
**characterised in that** the gas is conducted from the gas outlet of the airlock towards the gas inlet of the enclosure by a duct (12;13).
